# EUROPÄISCHE PATENTANMELDUNG

(11) **EP 4 814 842 A1**
(43) Veröffentlichungstag der Anmeldung: **30.09.2026**
(21) Anmeldenummer: 26166824.8
(22) Anmeldetag: 23.03.2026
(51) Int. Cl.: G06Q 10/20, B25J 9/16, G05D 1/246, G06T 7/73, G05B 19/42, G06F 3/01, G06V 40/20

(54) **VORRICHTUNG ZUR GENERIERUNG VON KI-GESTÜTZTEN HANDLUNGSABLÄUFEN**

(30) Priorität: 27.03.2025 DE 102025111883
(71) Anmelder: MAHA Maschinenbau Haldenwang GmbH & Co. KG, 87490 Haldenwang (DE)
(72) Erfinder: Geigle, Peter, 87435 Kempten (DE)
(74) Vertreter: MERH-IP Matias Erny Reichl Hoffmann Patentanwälte PartG mbB

(57) **Zusammenfassung**

Eine Vorrichtung zur Generierung von Kl-gestützten Handlungsabläufen 1 für eine zumindest teilautomatisierte Inspektions- und/oder Wartungsvorrichtung 10, umfassend: eine visuelle Erfassungseinheit 14 zur Erzeugung von visuellen Informationsdaten, wobei die visuelle Erfassungseinheit 14 eingerichtet ist, zumindest eigene optische Wahrnehmungen eines Trainers 6 bezügliches eines Zielobjekt zu erfassen und als die visuellen Informationsdaten zu speichern; eine Bewegungserfassungseinheit 15 zur Erzeugung von Bewegungsinformationsdaten, wobei die Bewegungserfassungseinheit 15 eingerichtet ist, zumindest eine Bewegung und eine Position des Körpers des Trainers 6 in einem dreidimensionalen Raum zu erfassen und als die Bewegungsinformationsdaten zu speichern; und eine Handlungsablaufs-Erzeugungseinheit 17, welche u.a. eingerichtet ist, ein Handlungsablaufmodell 23 zur Steuerung der Inspektions- und/oder Wartungsvorrichtung 10 anhand eines Bewegungsmusters zu erstellen.

## Beschreibung

Die vorliegende Erfindung betrifft eine Vorrichtung zur Generierung von KI-gestützten Handlungsabläufen für eine zumindest teilautomatisierte und zumindest teilautonome Inspektions- und/oder Wartungsvorrichtung sowie ein entsprechendes Verfahren.

Im Rahmen der Digitalisierung des Arbeitsalltags in Werkstätten oder Betrieben zur Wartung von Fortbewegungsmitteln wie beispielsweise Fahrrädern, Kraftfahrzeugen, Bussen, LKW, Zügen, Schiffen oder Luftfahrzeugen halten Technologien zur Unterstützung der Anwender zunehmend Einzug.

In der Werkstattumgebung sind Systeme bekannt, die eigenständig Aufgaben wie beispielsweise Scheinwerfereinstellungen oder Achsvermessungen durchführen. Diese Tätigkeiten zeichnen sich dadurch aus, dass deterministische Wenn-Dann-Bedingungen zur Durchführung hinreichend sind. Bei einer komplexeren Problemstellung stoßen genannte Systeme insbesondere bei Unregelmäßigkeiten allerdings an Grenzen. Abhilfe kann beispielsweise der Einsatz von Modellen künstlicher Intelligenz (KI oder AI) zur Steuerung sein. Beispielswese dem Prinzip des Transferlernens folgend wird ein auf einer Aufgabe trainiertes (KI-)Modell verwendet. Dieses Modell kann dann neue, aber verwandte Probleme lösen. Für komplexe Tätigkeiten existieren jedoch keine auf mathematischen Grundlagen basierenden Systeme, von welchen ein solches KI-Modell trainiert werden könnte.

Andererseits werden beschriebene Wartungsarbeiten im Werkstattalltag regelmäßig durchgeführt. Eine Dokumentation der Arbeit ist als Bewegtbild der Allgemeinheit frei zugänglich und auch bekannt. Für das gezielte Einlernen von KI-Modellen kann eine solche Ressource jedoch keine ausreichende Grundlage bieten, da wichtige Informationen nicht vermittelt werden.

Eine Aufgabe der Erfindung besteht folglich darin, eine Vorrichtung bereitzustellen, welche dazu geeignet ist, Daten zu erzeugen, die zum Training von KI-Modellen geeignet sind. Insbesondere sollen Tätigkeiten wie Inspektionen und Reparaturen anwendungs- und realitätsnah aufbereitet werden.

Zur Lösung dieser Aufgabe werden die Merkmale der unabhängigen Ansprüche vorgeschlagen. Vorteilhafte Weiterbildungen finden sich in den abhängigen Ansprüchen. Die jeweiligen abhängigen Ansprüche beziehen sich dabei auf bevorzugte Ausführungsformen, die jeweils für sich genommen oder in Kombination bereitgestellt werden können.

Gemäß einem Aspekt der Erfindung wird eine Vorrichtung zur Generierung von KI-gestützten Handlungsabläufen für eine zumindest teilautomatisierte und/oder zumindest teilautonome Inspektions- und/oder Wartungsvorrichtung vorgeschlagen. Das Einsatzgebiet einer solchen Vorrichtung ist bevorzugt im Umgang mit Fortbewegungsmitteln, insbesondere Fahrrädern, Kraftfahrzeugen, Busse, LKW, Baumaschinen, Züge, Schiffe oder Luftfahrzeuge. Bei genannter Aufzählung handelt es sich um eine nicht erschöpfende Liste an Möglichkeiten. Auch ist der Einsatz an nichtbeweglichen Objekten im Kontext der Werkstatt- oder Inspektionsarbeit möglich.

Die Vorrichtung kann eine visuelle Erfassungseinheit zur Erzeugung von visuellen Informationsdaten umfassen. Die visuelle Erfassungseinheit kann beispielsweise als Kamera oder Fotoapparat ausgestaltet sein und über zumindest ein Linsenelement zur Lenkung einfallenden Lichts verfügen. Auch kann die visuelle Erfassungseinheit über einen oder mehrere Sensoren der Umgebung verfügen und kann in der Lage sein, Informationen in mehrere Richtungen und von unterschiedlichen Positionen aus zu erfassen. Die visuelle Erfassungseinheit kann Informationen über den photoelektrischen Effekt aufnehmen, wobei die erfasste elektromagnetische Strahlung nicht auf das Spektrum von Wellenlängen beschränkt ist, welche vom menschlichen Auge wahrgenommen werden kann. Die visuelle Erfassungseinheit kann auch eine Wärmebildkamera umfassen. Weiterhin kann die visuelle Erfassungseinheit eingerichtet sein, zumindest eigene optische Wahrnehmungen eines Trainers bezügliches eines Zielobjekt zu erfassen und als die visuellen Informationsdaten zu speichern.

Die Vorrichtung kann eine Bewegungserfassungseinheit zur Erzeugung von Bewegungsinformationsdaten umfassen. Die Bewegungserfassungseinheit kann eingerichtet sein, zumindest eine Bewegung und eine Position des Körpers des Trainers in einem dreidimensionalen Raum zu erfassen und als die Bewegungsinformationsdaten zu speichern. Die Bewegungserfassungseinheit kann zumindest einen Beschleunigungs- und/oder Drehbeschleunigungssensor umfassen. Auch kann die Bewegungserfassungseinheit über zumindest ein passives und/oder aktives Positionierungselement verfügen, welches am zu inspizierenden Objekt und/oder in dessen Umgebung und/oder an einem Teil der Vorrichtung positioniert werden kann. Die Bewegungserfassungseinheit kann über übliche Verfahren und Methoden die Bewegungsinformationsdaten erzeugen, wie beispielweise vorbekannte Techniken zur Auswertung und Verarbeitung von Daten eines oder mehrerer Beschleunigungssensoren.

Die Vorrichtung kann eine Informationsdaten-Synchronisationseinheit umfassen, welche eingerichtet ist, basierend auf zumindest den visuellen Informationsdaten und den Bewegungsinformationsdaten, einen synchronisierten Datensatz zur Beschreibung eines Inspektions- und/oder Wartungsprozesses zu erstellen. Der synchronisierte Datensatz kann Daten zeitlich derart synchronisiert enthalten, sodass enthaltene Informationen zueinander in einem zeitlich einheitlichen Zusammenhang stehen. So kann bei der Erstellung des synchronisierten Datensatzes ein Teil der Daten zeitlich verschoben und/oder in ihrer Dauer gestaucht oder gestreckt werden. Die Erstellung des synchronisierten Datensatzes kann mit bekannten Datenverarbeitungsalgorithmen erfolgen, bspw. können dazu Datensätze unterschiedlicher Datenquellen mit Zeitinformationen versehen werden oder aufgenommen worden sein, so dass anhand der Zeitinformationen die Synchronisation der Datensätze unterschiedlicher Datenquellen erfolgen kann. Mit Hilfe der Verarbeitung durch die Informationsdaten-Synchronisationseinheit kann die Datenqualität zum Anlernen des KI-Models aktiv gesteigert werden.

Die Vorrichtung kann eine auf einem neuronalen Netzwerkbasierende Handlungsablaufs-Erzeugungseinheit, welche eingerichtet sein kann, den synchronisierten Datensatz zu analysieren, ein Bewegungsmuster für die Inspektions- und/oder Wartungsvorrichtung zur Nachbildung des Inspektions- und/oder Wartungsprozesses basierend auf dem synchronisierten Datensatz zu extrahieren (oder anzulernen) und ein Handlungsablaufmodell zur Steuerung der Inspektions- und/oder Wartungsvorrichtung anhand des angelernten Bewegungsmusters zu erstellen bzw. zu trainieren. Die Verarbeitung der Daten durch die Handlungsablaufs-Erzeugungseinheit kann mittels bekannter Datenauswertungsprogramme und/oder Datenauswertungstechniken erfolgen, um relevante Bewegungsmuster bzw. Schritte im Ablauf der Prozesses zu erfassen und als Trainingsdaten zu extrahieren. Bspw. können die Auswertungen im Hinblick auf Bild-/Videodaten umfassen, dass die Bilddaten mittels vorbekannter Bilderkennungsalgorithmen/-techniken ausgewertet werden. Entsprechendes gilt für Tondaten, Messwertedaten, etc.

Bevorzugt ist die Handlungsablaufs-Erzeugungseinheit basierend auf einem neuronalen Netzwerk aufgebaut, so dass die oben genannten Analysen und Extraktionen von Trainingsdaten auch mittels KI/neuronalem Netzwerk erfolgen kann, wozu vorbekannte neuronale Netzwerkkonfigurationen, KI's, etc. heranziehbar sind.

Die extrahierten Daten können als Trainingsdaten für die Anlernung eines Handlungsablaufmodelles herangezogen werden, so dass das Handlungsablaufmodell trainiert wird, die entsprechenden Abläufe nach dem Training selbstständig durchzuführen. Entsprechend ist das Handlungsablaufmodell ein KI-Modell bzw. neuronales Netz, dass mit den extrahierten Daten auf übliche Weise angelernt wird.

Die Vorrichtung kann ferner eine Annotations-Erfassungseinheit umfassen, bspw. ein Texteingabetool, wie ein (portabler) Rechner, oder ein Spracherfassungsmittel, wie ein Mikrofon (wobei bei Spracheingaben diese zunächst mit vorbekannten Mitteln in computerverwertbaren Text umgewandelt werden müssten). Die Annotations-Erfassungseinheit kann eingerichtet sein, zusätzliche Informationen bezüglich des Inspektions- und/oder Wartungsprozesses durch eine direkte Eingabe des Trainers, wie u.a. durch Sprache oder Eingabetext, zu erfassen und als Annotationsinformationsdaten zu speichern. Durch die Annotations-Erfassungseinheit kann nicht-visueller Kontext den Daten hinzugefügt werden, die sich vorteilhaft auf das Anlernen des KI-Modells auswirken, bspw. Sprachbefehle oder Texteingaben des Roboter- oder menschlichen Trainers.

Die Informationsdaten-Synchronisationseinheit kann eingerichtet sein, den synchronisierten Datensatz zur Beschreibung des Inspektions- und/oder Wartungsprozesses zusätzlich basierend auf den Annotationsinformationsdaten zu erstellen.

Die Vorrichtung kann eine Handinteraktions-Erfassungseinheit zur Erzeugung von Handinteraktionsinformationsdaten umfassen. Die Handinteraktions-Erfassungseinheit kann eingerichtet sein, zumindest einen Handparameter aus Bewegungen einzelner Handabschnitte des Trainers, Kontaktpunkte einer Hand des Trainers mit einem Gegenstand und haptischen Eigenschaften der Hand des Trainers und/oder des Gegenstandes während einer Interaktion der Hand des Trainers mit dem Gegenstand zu erfassen und als die Handinteraktionsinformationsdaten zu speichern. Die Handinteraktions-Erfassungseinheit kann bekannte Vorrichtungen, Systeme und/oder Methoden nutzen, um Handinteraktionsinformationsdaten zu erzeugen, bspw. wie dies vorbekannt ist von VR-Handsteuereinheiten, etc.

Die Informationsdaten-Synchronisationseinheit kann eingerichtet sein, den synchronisierten Datensatz zur Beschreibung des Inspektions- und/oder Wartungsprozesses zusätzlich basierend auf den Handinteraktionsinformationsdaten zu erstellen.

Die Vorrichtung kann eingerichtet sein, dass die zur Erstellung des synchronisierten Datensatzes erfassten Informationsdaten zeitlich parallel von den jeweiligen Erfassungseinheiten erfasst werden, vorzugsweise während einer einzelnen Handlung des Trainers. Auf diese Weise kann ein konsistenter Datensatz erzeugt werden, was vorteilhaft für das Anlernen des KI-Modells ist.

Die von der visuellen Erfassungseinheit erfassten eigenen optischen Wahrnehmungen des Trainers können bezüglich des Zielobjektes zumindest eine Blickrichtung des Trainers auf das Zielobjekt oder ein Teil des Zielobjektes und dreidimensionale Raumkoordinaten des Blickursprungs und des vom Trainer fokussierten Blickpunktes umfassen.

Die visuelle Erfassungseinheit kann zusätzlich eingerichtet sein, einen Blickvektor basierend auf der erfassten Blickrichtung und den dreidimensionalen Raumkoordinaten des Blickursprungs und des fokussierten Blickpunktes zu berechnen, welcher die Richtung des Blicks des Trainers relativ zu der Position des Trainers beschreibt und den Blickvektor als zusätzliche Komponente in den visuellen Informationsdaten zu speichern.

Die visuelle Erfassungseinheit kann zumindest eine Kamera umfassen und mit einem Eye-Tracking-Mechanismus ausgestattet sein, um zumindest die Blickrichtung des Trainers zu erfassen. Weiterhin kann die visuelle Erfassungsvorrichtung eingerichtet sein, die optische Wahrnehmung des Trainers kontinuierlich zu erfassen.

Die Bewegungserfassungseinheit kann eine Mehrzahl von auf optischen und/oder mechanischen Wechselwirkungen basierenden Körpersensorelementen umfassen, welche zur Erfassung der Bewegung und der Position des Körpers des Trainers an verschiedenen Stellen des Körpers des Trainers angebracht werden können. Die Bewegungserfassungseinheit kann weiterhin eingerichtet sein, die Bewegung und die Position des Körpers des Trainers basierend auf einer Zeitreihe von mittels der Körpersensorelementen erfassten Daten zu erfassen.

Die Handinteraktions-Erfassungseinheit kann ein oder mehrere auf optischen und/oder mechanischen Wechselwirkungen basierende Handsensorelemente umfassen, welche zur Erfassung des zumindest einen Handparameters an zumindest einer Stelle der Hand des Trainers angebracht werden können. Die Bewegungserfassungseinheit kann eingerichtet sein, den zumindest einen Handparameter basierend auf einer Zeitreihe von mittels der Handsensorelementen erfassten Daten zu erfassen. Die Handinteraktions-Erfassungseinheit kann die haptischen Eigenschaften der Hand des Trainers und/oder des Gegenstandes zumindest einen ausgeübten Druck des Trainers auf den Gegenstand, eine durch die Interaktion des Trainers erzeugte Verformung des Gegenstands oder eine Temperatur des Gegenstands umfassen.

Die Informationsdaten-Synchronisationseinheit kann eingerichtet sein, den synchronisierten Datensatz in Echtzeit während der Erfassung der jeweiligen Informationsdaten durch die Erfassungseinheiten zu erstellen und der Handlungsablaufs-Erzeugungseinheit zum Anlernen eines auf der momentanen Handlung des Trainers basierenden Bewegungsmusters zu übertragen.

Der Wartungs- und/oder Inspektionsprozess kann zumindest ein Prozess zur Montage, Demontage oder Justierung von Bauteilen innerhalb eines Fahrzeugs oder eines Fahrzeugelements sein. Das Zielobjekt und der von der Handinteraktions-Erfassungseinheit erfasste Gegenstand kann zumindest ein Werkzeug oder ein Fahrzeugelement sein.

Weiterhin wird ein System zur Durchführung von KI-gestützten Handlungsabläufen für eine zumindest teilautomatisierte und/oder teilautonome Inspektions- und/oder Wartungsvorrichtung vorgeschlagen. Das System kann die zumindest teilautomatisierte und/oder teilautonome Inspektions- und/oder Wartungsvorrichtung umfassen, wobei die teilautonome/teilautomatisierte Funktionalität insbesondere durch Integration eines oder mehrerer (KI-)Handlungsablaufmodelle bewirkt wird, das/die von der zuvor oben beschriebenen Vorrichtung (die optional weiterhin Teil des Systems ein kann, um fortlaufend Training auszuführen) angelernt/trainiert worden sein kann.

Somit kann das System die zumindest teilautomatisierte und/oder teilautonome Inspektions- und/oder Wartungsvorrichtung umfassen, welche dazu eingerichtet ist, das durch die Handlungsablaufs-Erzeugungseinheit erstellte Handlungsablaufmodell(e) zu integrieren und basierend auf dem integrierten Handlungsablaufmodel den Inspektions- und/oder Wartungsprozess durchzuführen.

Weiterhin wird ein Verfahren zur Generierung von KI-gestützten Handlungsabläufen für eine zumindest teilautomatisierte Inspektions- und/oder Wartungsvorrichtung vorgeschlagen. Das Verfahren kann die Schritte umfassen:
Erfassen von zumindest eigenen optischen Wahrnehmungen eines Trainers bezügliches eines Zielobjekt und Speichern der optischen Wahrnehmungen als die visuellen Informationsdaten mittels einer visuellen Erfassungseinheit.

Erfassen zumindest einer Bewegung und einer Position des Körpers des Trainers in einem dreidimensionalen Raum.

Speichern der zumindest einen Bewegung und Position des Körpers des Trainers als Bewegungsinformationsdaten mittels einer Bewegungserfassungseinheit.

Erstellen, basierend auf zumindest den visuellen Informationsdaten und den Bewegungsinformationsdaten, eines synchronisierten Datensatz zur Beschreibung eines Inspektions- und/oder Wartungsprozesses mittels einer Informationsdaten-Synchronisationseinheit.

Analysieren des synchronisierten Datensatzes, Extrahieren eines Bewegungsmuster für die Inspektions- und/oder Wartungsvorrichtung zur Nachbildung des Inspektions- und/oder Wartungsprozesses basierend auf dem synchronisierten Datensatz und Erstellen eines Handlungsablaufmodel zur Steuerung der Inspektions- und/oder Wartungsvorrichtung anhand des angelernten Bewegungsmusters mittels einer auf einem bevorzugt neuronalem Netzwerk-basierenden Handlungsablaufs-Erzeugungseinheit.

Das Verfahren kann weiterhin die Schritte umfassen:
Erfassen von zusätzlichen Informationen bezüglich des Inspektions- und/oder Wartungsprozesses durch eine direkte Eingabe des Trainers an eine Annotations-Erfassungseinheit, und Speichern der zusätzlichen Informationen als Annotationsinformationsdaten mittels der Annotations-Erfassungseinheit.

Erstellen des synchronisierten Datensatzes zur Beschreibung des Inspektions- und/oder Wartungsprozesses zusätzlich basierend auf den Annotationsinformationsdaten mittels der Informationsdaten-Synchronisationseinheit.

Erfassen von zumindest einem Handparameter aus einer Gruppe von: Bewegungen einzelner Handabschnitte des Trainers, Kontaktpunkte einer Hand des Trainers mit einem Gegenstand und haptischen Eigenschaften der Hand des Trainers und/oder des Gegenstandes während einer Interaktion der Hand des Trainers mit dem Gegenstand mittels einer Handinteraktions-Erfassungseinheit und Speichern des zumindest einen Handparameters als Handinteraktionsinformationsdaten mittels der handinteraktions-Erfassungseinheit.

Erstellen des synchronisierten Datensatzes zur Beschreibung des Inspektions- und/oder Wartungsprozesses zusätzlich basierend auf den Handinteraktionsinformationsdaten mittels der Informationsdaten-Synchronisationseinheit.

Erfassen der zur Erstellung des synchronisierten Datensatzes erfassten Informationsdaten zeitlich parallel von den jeweiligen Erfassungseinheiten, vorzugsweise während einer einzelnen Handlung des Trainers.

Erstellung des synchronisierten Datensatzes in Echtzeit während der Erfassung der jeweiligen Informationsdaten durch die Erfassungseinheiten und der Handlungsablaufs-Erzeugungseinheit zum Anlernen eines auf der momentanen Handlung des Trainers basierenden Bewegungsmusters übertragen wird.

Vorteilhafte Ausgestaltungen und weitere Details der vorliegenden Erfindung werden im Folgenden anhand verschiedener Ausführungsbeispiele mit Bezug auf schematische Figuren beschrieben. In den schematischen Zeichnungen wird die Verbindung näher erläutert.

### Kurzbeschreibung der Figuren

Figur 1: zeigt eine Trainingsbrille in einem ersten Anwendungsbeispiel;
Figur 2: zeigt eine Trainingsbrille in einem weiteren Anwendungsbeispiel;
Figur 3: zeigt die Trainingsbrille aus einer weiteren Perspektive;
Figur 4: zeigt einen Trainer mit Trainingsbrille;
Figur 5: zeigt den Trainer mit Trainingsbrille und Trainingsobjekt;
Figur 6: zeigt ein Sichtfeld aus Sicht der Trainingsbrille;
Figur 7a: zeigt ein Trainingssetup in einer ersten Ansicht;
Figur 7b: zeigt das Trainingssetup in einer weiteren Ansicht;
Figur 8: zeigt ein Koordinatensystem der Trainingsbrille;
Figur 9: zeigt einen Pfad der Trainingsbrille;
Figur 10; zeigt einen möglichen schematischen Aufbau der Vorrichtung;

### Detaillierte Beschreibung bevorzugter Ausführungsformen

Im Folgenden werden Ausführungsbeispiele der vorliegenden Erfindung anhand beispielhafter Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt.

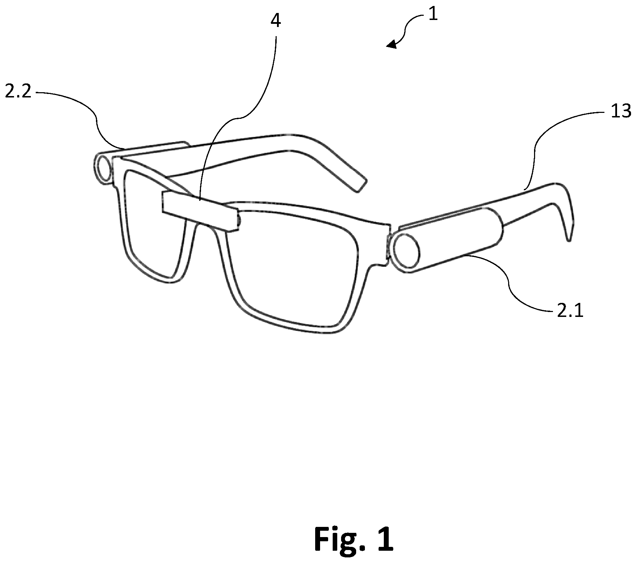

Figur 1 zeigt eine Trainingsbrille 13 in einem ersten Anwendungsbeispiel. Die Trainingsbrille 13 umfasst zumindest eine erste Kamera 2.1, die visuelle Informationsdaten aufnehmen kann. In einem Beispiel der hier beschriebenen Trainingsbrille 13 kann die Kamera 2.1 als einzelnes Modul vorgesehen sein. Wie in Figur 1 gezeigt, kann diese auch in Kombination mit einer zweiten Kamera 2.2 als visuelle Erfassungseinheit 14 vorgesehen sein. Der Einsatz zumindest zweier Kameras 2.1, 2.2 ist dahingehend vorteilhaft, dass räumliche Eindrücke durch Kameramodule erfasst werden können, die jeweils zur Erfassung zweidimensionaler Informationen eingerichtet sind. Das zumindest eine Kameramodul 2.1, 2.2 ist fest mit der Trainingsbrille 13 verbunden und kann beispielsweise zu Wartungszwecken demontiert werden.

Die Trainingsbrille 13 kann, wenn auch nicht in Figur 1 gezeigt, zudem weitere Module/Einrichtungen aufweisen, um Daten/Informationen zu erfassen, wie dies nachfolgend auch beschrieben werden wird. Die gezeigte Form der Trainingsbrille 13 ist ferner rein beispielhaft und kann auch jede andere Form annehmen.

Es sei erwähnt, dass die Trainingsbrille 13 auch ein Kommunikationsmodul umfasst, das Informationen senden und empfangen kann. Die Datenübertragung der Informationen kann kabelgebunden oder beispielsweise über elektro-magnetische Strahlung erfolgen. Die Trainingsbrille 13 umfasst bevorzugt auch eine Energieversorgungseinheit, welche beispielsweise mittels eines Energiespeichers, der Energie aufnehmen und/oder abgeben kann, die Trainingsbrille 13 mit Energie versorgt, und/oder über einen Anschluss an eine außerhalb der Vorrichtung 1 eingerichtete Energiequelle verfügt.

Weiterhin, wie in Figur 1 gezeigt, umfasst die Trainingsbrille 13 eine Eye-Tracking-Einheit 4, die dazu eingerichtet ist, den Fokuspunkt 9 eines (humanoiden Roboter- oder menschlichen) Trainers 6 zu bestimmen. In Figur 1 ist die dem Trainer 6 abgewandte Seite der Eye-Tracking-Einheit 4 zu sehen, welche im Wesentlichen ein Gehäuse darstellt, das die Einheit vor Umwelteinflüssen wie spritzende Flüssigkeiten, beispielsweise Betriebsflüssigkeiten oder Regen, Wärmestrahlung, Luftfeuchtigkeit oder mechanischen Einflüssen schützt. Weiterhin kann die Trainingsbrille mit oder ohne optische Gläser zur Korrektur einer Fehlsichtigkeit des Trainers 6 und/oder zum Schutz dessen Augen ausgestattet sein. Das Gehäuse der Eye-Tracking-Einheit 4 ragt dabei bevorzugt in den Bereich der optischen Gläser hinein.

Weitere der Vorrichtung 1 zur Generierung von KI-gestützten Handlungsabläufen zugehörige Einheiten sind in Figur 1 der Übersichtlichkeit halber nicht dargestellt. Diese können teilweise integral in der Trainingsbrille 13 enthalten und/oder extern eingerichtet sein.

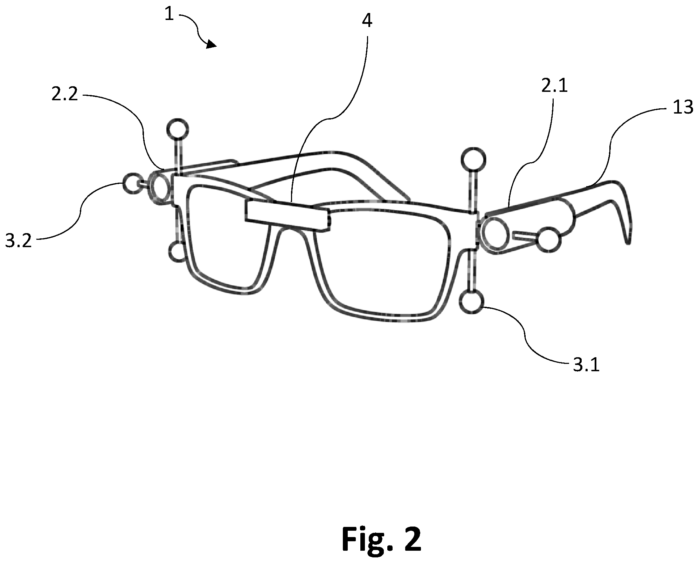

Die Figur 2 zeigt eine Trainingsbrille 13 in einem weiteren Anwendungsbeispiel. Zusätzlich zu den in Figur 1 beschriebenen Merkmalen kann die Vorrichtung/ Trainingsbrille 13 hier zumindest eine Positionsmarke 3.1 aufweisen. Eine weitere Positionsmarke 3.2 ist auf der der Eye-Tracking-Einheit 4 gegenüberliegenden Seite der Trainingsbrille 13 eingerichtet. Die Positionsmarken 3.1, 3.2 sind vorteilhaft, um die Positionsbestimmung der Trainingsbrille 13 und der damit verbundenen visuellen Erfassungseinheit 14 zu verbessern. Die Positionsmarken 3.1 und 3.2 sind ausgeführt als Markierungen, die sich an definierten Abständen und Positionen zueinander und in Relation zu zumindest einer Kamera 2.1, 2.2 befinden. Die Markierungen zeichnen sich durch eine definierte Rückstrahlfähigkeit und/oder farbliche Markierung aus. Die Markierungen können im Wesentlichen kugelförmig zur optimierten Erkennbarkeit aus einer Vielzahl von Positionen ausgeführt sein.

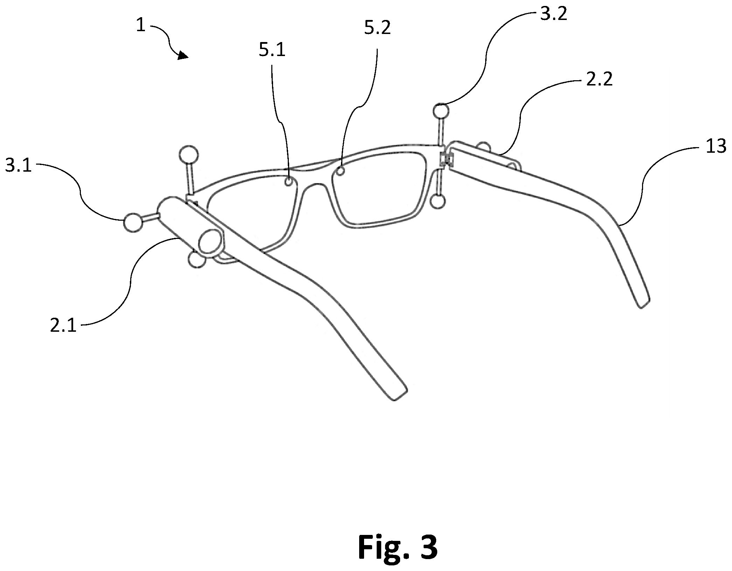

Die Figur 3 zeigt die Trainingsbrille 13, wie in Figur 2 beschrieben, aus einer dem Trainer 6 zugewandten Seite. Der Trainer 6 ist nicht dargestellt. Weiterhin ist die zumindest eine Optik der Eye-Tracking-Einheit 5.1 zu erkennen. Deren Anordnung ist bevorzugt derart ausgeführt, sodass sich das linke Auge des Trainers 6 im Sichtbereich der Optik der Eye-Tracking-Einheit 5.1 befindet. Durch visuelle Beobachtung des Augapfels einschließlich der Pupille wird die Blickrichtung des Trainers 6 bestimmt. Die weitere Optik der Eye-Tracking-Einheit 5.2 analysiert das rechte Auge des Trainers 6. Durch Verknüpfung der Informationen beider Optiken wird die Zuverlässigkeit der ermittelten Daten erhöht. Im Hinblick auf das hier beschriebene Eye-Tracking wird im Übrigen auf entsprechend der Fachperson bekannte Techniken zur Umsetzung verwiesen, die hier zum Einsatz gebracht werden können.

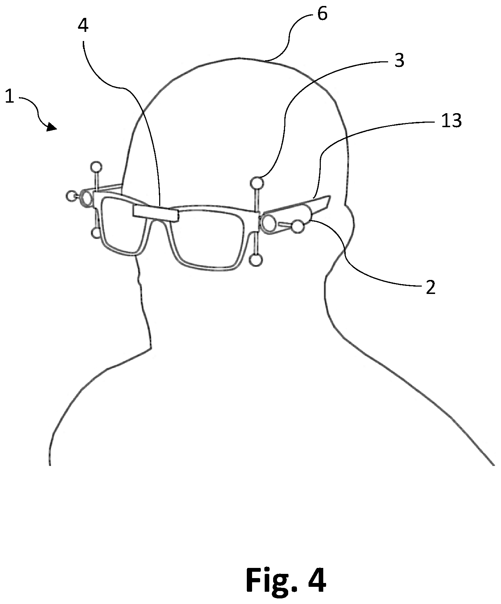

Die Figur 4 zeigt ein Beispiel mit dem Trainer 6 während der Nutzung der Trainingsbrille 13. Gemäß diesem hier gezeigten Beispiel, wobei andere Formen möglich sind, sitzt die Trainingsbrille 13 auf der Nase und beiden Ohren des Trainers 6. Durch Anpassung der Stege zu beiden Seiten kann der Tragekomfort und Festsitz angepasst werden. Beide Hände bleiben bei der Nutzung der Trainingsbrille 13 zur Verfügung zur Durchführung beispielsweise von Wartungs- und/oder Inspektionsarbeiten.

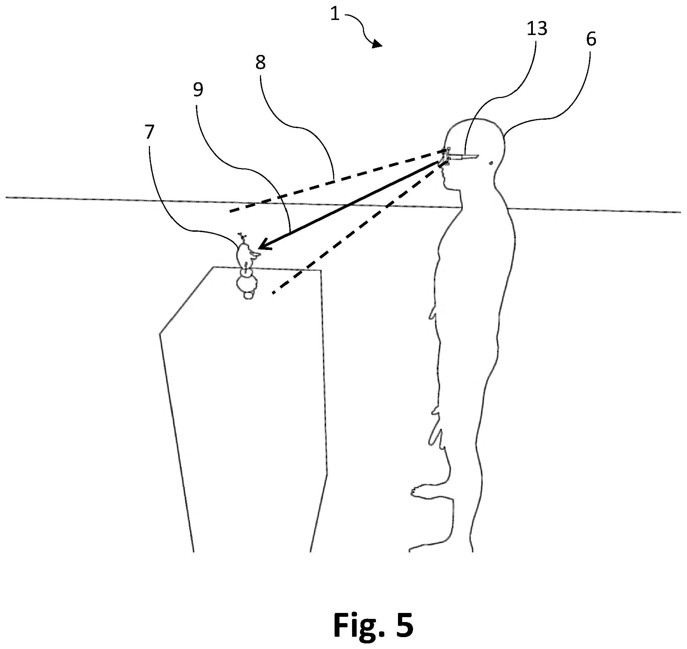

Die Figur 5 zeigt den Trainer 6 mit Trainingsbrille 13 und einem abstrakt gewählten Trainingsobjekt 7. Das Trainingsobjekt 7 ist in erhöhter Position auf einem Sockel positioniert. Der Trainer 6 trägt die Trainingsbrille 13 im Gesicht, sodass die visuelle Erfassungseinheit 14 die Umgebung einschließlich der Tätigkeiten wie Inspektion oder Montage erfasst. Die visuelle Erfassungseinheit 14 registriert Informationen innerhalb des Sichtfelds 8. Das Sichtfeld 8 ist in der Figur 5 durch gestrichelte Linien dargestellt. Weiterhin erfasst die Eye-Tracking-Einheit 4 einen Fokuspunkt 9. Der Fokuspunkt 9 beschreibt den Bereich, auf welchen die Pupillen des Trainers 6 zielen. Mit dem Fokuspunkt 9 soll insbesondere der Bereich bestimmt werden, welchem der Trainer 6 besondere Aufmerksamkeit zukommen lässt. Der Fokuspunkt 9 kommt insbesondere in Kombination mit der Annotations-Erfassungseinheit 18 zum Anlernen der KI/Handlungsablaufmodel zum Einsatz. Der Trainer 6 kann sich frei bewegen und die Hände werden nicht für den Einsatz der Vorrichtung zur Generierung von KI-gestützten Handlungsabläufen 1 gebunden.

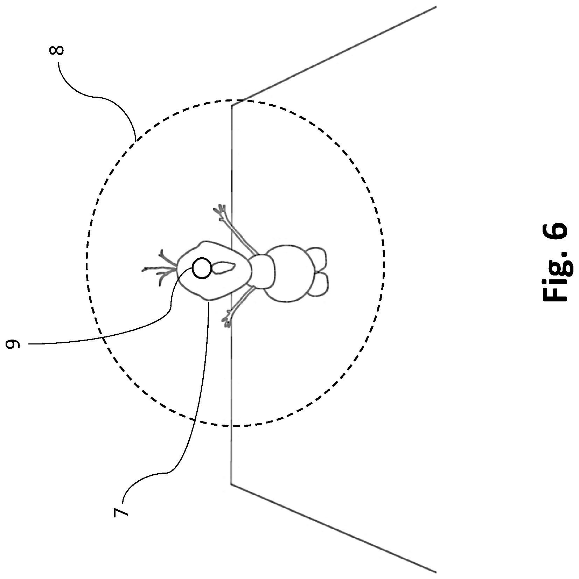

Die Figur 6 zeigt das Sichtfeld 8 aus der Perspektive der Trainingsbrille 13. Das Trainingsobjekt 7 befindet sich mittig vom Sichtfeld 8. Das Sichtfeld 8 hat eine vorwiegend runde und minimal elliptische Ausdehnung. Je nach Ausgestaltung der visuellen Erfassungseinheit 14 kann das Sichtfeld 8 andere geometrische Formen umfassen, insbesondere eine größere Ausdehnung in die horizontale Richtung, als in die vertikale Richtung. Gleichsam kann die Außenkontur des Sichtfelds 8 vorwiegend rechteckig gestaltet sein. Weiterhin ist der der Fokuspunkt 9 als Kreis auf dem Trainingsobjekt 7 positioniert. Der Fokuspunkt 9 kann in einer anderen Ausgestaltungsform als 0-dimensionales Objekt beziehungsweise als Punkt ausgestaltet sein oder wiederum alternativ als Wahrscheinlichkeitsverteilung der Blickerfassung über einen Bereich, insbesondere über das Sichtfeld 8.

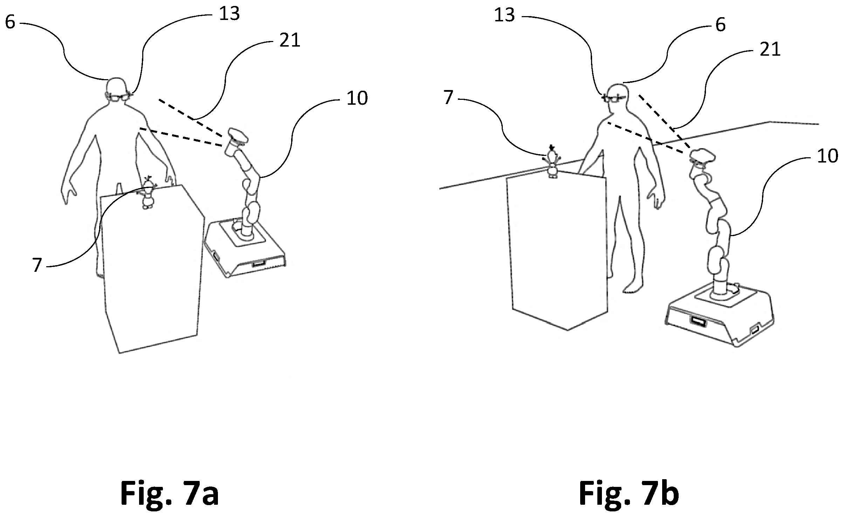

Die Figuren 7a und 7b zeigen ein beispielhaftes Trainingssetup zur Generierung von KI-gestützten Handlungsabläufen. Dieselbe Situation wird jeweils aus leicht geänderter Position gezeigt. Der Trainer 6 trägt die Trainingsbrille 13 und steht vor dem Trainingsobjekt 7. Ebenfalls abgebildet ist eine Inspektions- und/oder Wartungsvorrichtung 10, die in einem Anwendungsbeispiel auch zur Positionsbestimmung der Ursprungsposition des Videos der visuellen Erfassungseinheit 14 eingerichtet sein kann, wofür vorbekannte Techniken/Algorithmen herangezogen werden können. Die Inspektions- und/oder Wartungsvorrichtung 10 kann zumindest teilautomatisiert und/oder zumindest teilautonom (teilautonom oder autonom wird diese durch das Anlernen der KI-Modell(e), mit deren Hilfe die Wartungsvorrichtung nach dem Training (teil-)autonom Abläufe durchführen kann) ausgestaltet sein. Um das Training zu starten, können beispielweise Ursprung, Winkel und Blickrichtung der Trainingsbrille 13 erfasst werden. Dies kann über ein statisches Setup im Raum, wie beispielsweise Objekte oder Markierungen, oder durch die Inspektions- und/oder Wartungsvorrichtung 10 erfolgen. Die Inspektions- und/oder Wartungsvorrichtung 10 verfügt über einen Erfassungsbereich 21, innerhalb welchem analog zum Sichtfeld 8 der visuelle Erfassungseinheit 14 der Trainingsbrille 13 Informationen erfasst werden können. Die Inspektions- und/oder Wartungsvorrichtung 10 erfasst die Positionsmarker 3.1, 3.2 und bestimmt dadurch die Position der Trainingsbrille. Gleichsam können durch die Positionsbestimmung Kopfbewegungen, Körperbewegungen und die absolute Position bestimmt werden, welche mit den Informationen der visuellen Erfassungseinheit 14 vereint werden.

Ein weiterer Aspekt der Inspektions- und/oder Wartungsvorrichtung 10 ist es nach Integration des trainierten KI-Modells, bzw. des Handlungsablaufmodell 23 teilautonom/teilautomatisiert arbeiten zu können. Beispielsweise kann das trainierte Handlungsablaufmodell 23 als Software auf einem Speicher der Inspektions- und/oder Wartungsvorrichtung 10 integriert/gespeichert werden oder letztere kann Remote auf einen Server, auf dem das trainierte Handlungsablaufmodell 23 gespeichert ist, zugreifen. Im Übrigen kann das Training des Handlungsablaufmodell 23 auch direkt auf der Inspektions- und/oder Wartungsvorrichtung 10 erfolgen, wobei dann die Vorrichtung 1 die extrahierten Trainingsdaten an diese übermitteln kann.

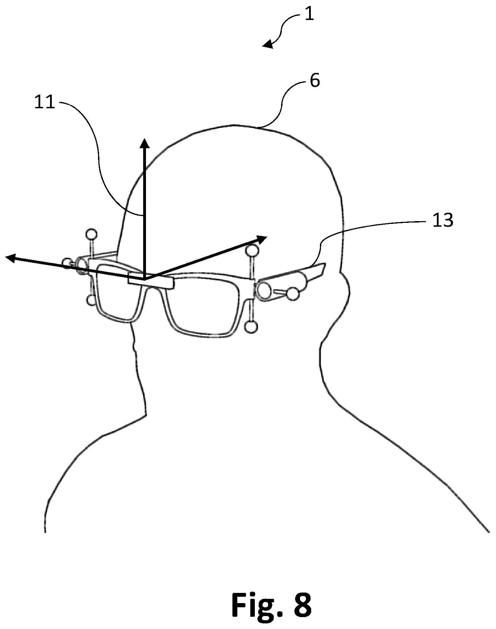

Figur 8 zeigt ein Koordinatensystem 11 der Trainingsbrille 13. Der Ursprung ist am mittig auf der dem Trainer 6 abgewandten Oberfläche des Gehäuses der Eye-Tracking-Einheit 4 angeordnet. Eine erste Koordinate ist entgegengesetzt der neutralen Blickrichtung des Trainers 6 orientiert. Eine zweite Koordinate ist in Blickrichtung des Trainers 6 nach rechts hin orientiert. Eine dritte Koordinate ist der Konvention folgend orientiert. Im gezeigten Anwendungsbeispiel ist die dritte Koordinate für den aufrechtstehenden Trainer 6 nach oben hin orientiert. Drehungen sind jeweils der Konvention folgend positiv im Uhrzeigersinn in Koordinatenrichtung blickend orientiert.

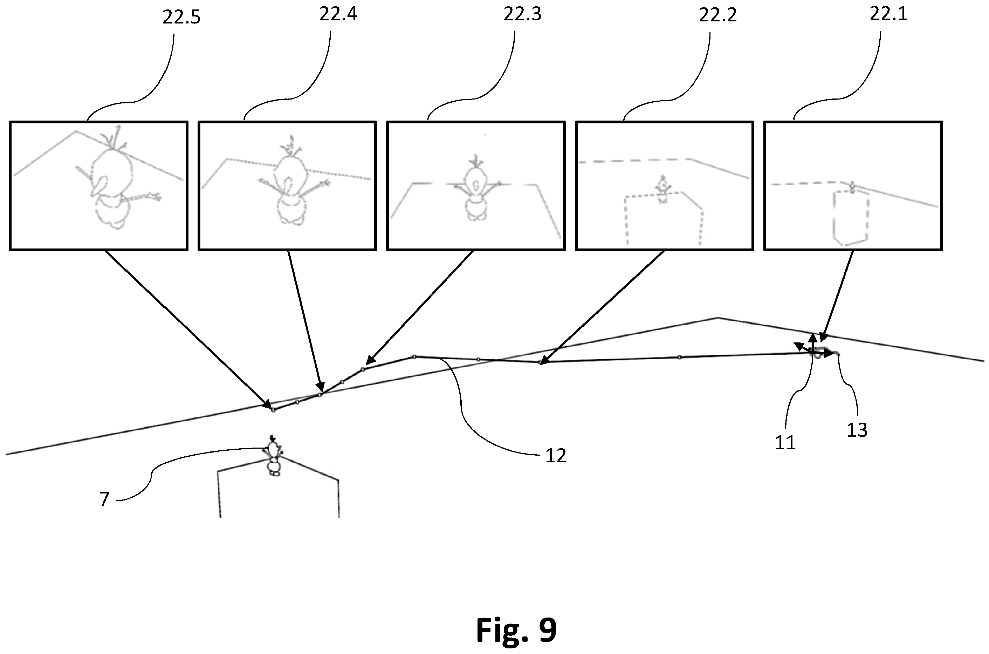

Figur 9 zeigt einen Pfad 12, welcher bei Annäherung des Trainers 6 (nicht dargestellt) mit der Trainingsbrille 13 an das Trainingsobjekt 7 aufgezeichnet wird. Zu Beginn der Aufzeichnung wird das Trainingsbild 22.1 erstellt, zu welchem die Ursprungsposition des Videos beispielsweise mit Unterstützung der Inspektions- und/oder Wartungsvorrichtung 10 (nicht dargestellt) bestimmt wird. Darauf aufbauend erfolgt die Positionsbestimmung kontinuierlich, sodass für die folgenden Trainingsbilder 22.2, 22.3, 22.4, 22.5 Kopfbewegungen, Körperbewegungen und absolute Position bestimmt werden. Die Trainingsbilder 22.1, 22.2, 22.3, 22.4, 22.5 sind jeweils Ausschnitte aus zumindest einer Videoaufnahme.

Im Folgenden wird basierend auf dem beispielhaft erläuterten Grundprinzip der vorliegenden Offenbarung eine mögliche reale beispielhafte Trainingssituation erläutert, die zum weiteren Verständnis der vorliegenden Offenbarung und möglicher realer Einsatzzwecke dienlich ist. Weitere entsprechende und ähnliche Trainingssituationen und Einsatzzwecke sind entsprechend ableitbar und auch Teil dieser Offenbarung. Der Trainer 6 befindest sich in einer Werkstatt zur Instandhaltung von Kraftfahrzeugen. Der Trainer 6 soll Handlungsabläufe zur Inspektion eines Fahrzeuges trainieren. Es wird die Trainingsbrille 13 und die teilweise automatisierte Inspektions- und/oder Wartungsvorrichtung 10 verwendet. Im Zeitpunkt des Starts der Trainingsaufnahme wird die absolute Position des Trainers 6 einschließlich der Trainingsbrille 13 bestimmt, was mit Hilfe vorbekannter Techniken und Abläufe erfolgen kann. Der Trainer 6 blickt auf das Fahrzeug und kommentiert: "Fahrzeug erkannt." Der Trainer 6 nähert sich der Motorhaube, fixiert diese mit dem Blick und kommentiert: "Annäherung an Motorhaube." Der Trainer 6 überprüft die Motorhaube nach Unregelmäßigkeiten, entdeckt eine Anomalie und kommentiert: "Unklarer Punkt entdeckt." Es wird kontinuierlich zumindest eine Videoaufzeichnung durch die visuelle Erfassungseinheit 14 erzeugt. Die Aufzeichnung kann aus zumindest einer Perspektive erfolgen. Die visuelle Erfassungseinheit 14 umfasst zudem die Eye-Tracking-Einheit 4, welche den Blickpunkt oder Fokuspunkt 9 und die Blickrichtung erfasst. Die Blickrichtung umfasst die Richtung, welcher der Trainer 6 den Blick zuwendet. Die Bewegungs-Erfassungseinheit 15 erfasst Bewegungen und Positionen des Körpers des Trainers 6 im Raum. Weiterhin zeichnet die Bewegungs-Erfassungseinheit 15 Körperhaltungen, Bewegungsabläufe und Kopfneigungen des Trainers 6 auf. Die Handinteraktions-Erfassungseinheit 19 erfasst Bewegungen einzelner Finger sowie ganzer Hände. Weiterhin misst die Handinteraktions-Erfassungseinheit 19 Kontaktpunkte und Interaktionen mit Objekten. Die Informationen werden als Handinteraktionsinformationsdaten gespeichert. Die Annotations-Erfassungseinheit 18 erfasst die Kommentierung des Trainers 6 und erstellt Annotationsinformationsdaten. Die Informationsdaten-Synchronisationseinheit 16 erstellt den synchronisierten Datensatz in Echtzeit. Der synchronisierte Datensatz wird der Handlungsablaufs-Erzeugungseinheit 17 zum Anlernen eines auf der momentanen Handlung des Trainers 6 basierenden Bewegungsmusters übertragen.

Eine weitere Trainingssituation, die hier für das weitere Verständnis der Offenbarung dargelegt wird, kann das Anlernen einer mechanischen Interaktion verdeutlichen. Es soll zur Verdeutlichung die Demontage eines Rades dargestellt werden. Die initialen Schritte erfolgen analog des letzten Beispiels. Der Trainer 6 blickt auf das Fahrzeug und kommentiert: "Fahrzeug erkannt." Der Trainer 6 nähert sich dem zu demontierenden Rad, blickt dieses an und kommentiert: "Annäherung an zu demontierendes Rad." Der Trainer 6 bewegt sich zu Werkzeugschrank, öffnet Schublade und kommentiert: "Schublade an Werkzeugschrank geöffnet." Der Trainer 6 nimmt Werkzeug in die Hand und kommentiert: "Werkzeug aufgenommen." Der Trainer 6 nähert sich dem zu demontierenden Rad, löst erste Mutter, legt diese zur Seite und kommentiert: "Erste Mutter gelöst und gelagert." Der Trainer 6 wiederholt den Vorgang bis alle Muttern gelöst und gelagert sind, sowie sich das Rad frei auf der Nabe befindet. Der Trainer 6 nimmt das zu demontierende Rad mit den Händen von der Nabe ab, legt das Rad ab und kommentiert: "Rad abgenommen und abgelegt." Die Vorrichtung erstellt auf Grundlage der Informationen einen Datensatz zur Generierung von KI-gestützten Handlungsabläufen.

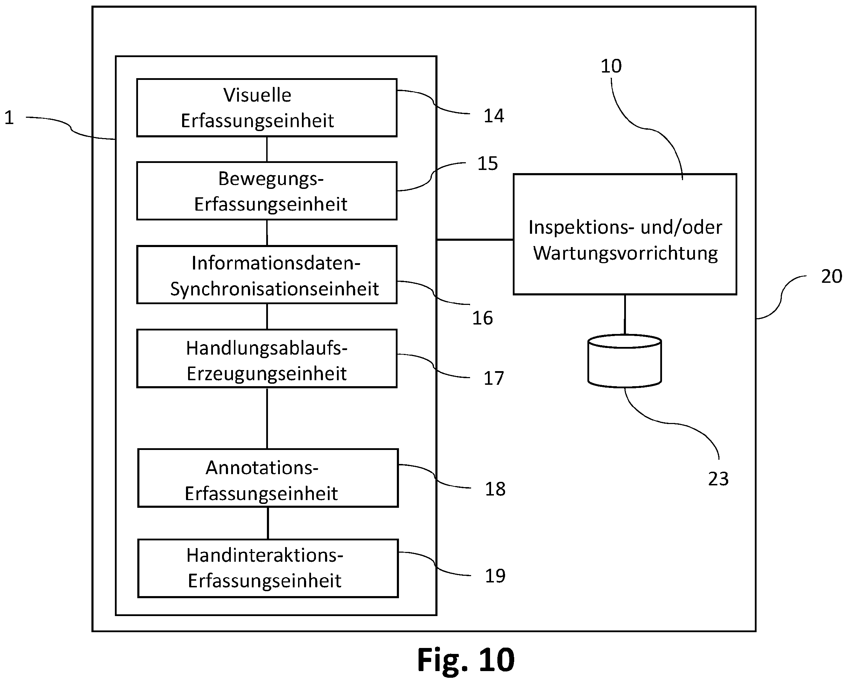

Figur 10 zeigt den schematischen Aufbau der Vorrichtung zur Generierung von KI-gestützten Handlungsabläufen 1, sowie des Systems zur Durchführung von KI-gestützten Handlungsabläufen 20. Die Vorrichtung zur Generierung von KI-gestützten Handlungsabläufen 1 umfasst (jeweils in Form von Hardware und/oder Software) zumindest eine visuelle Erfassungseinheit 14 und zumindest eine Bewegungs-Erfassungseinheit 15 und zumindest eine Informationsdaten-Synchronisationseinheit 16 und zumindest eine Handlungsablaufs-Erzeugungseinheit 17. In einer vorteilhaften Ausgestaltungsform umfasst die Vorrichtung weiterhin bspw. eine Annotations-Erfassungseinheit 18 und / oder zumindest eine Handinteraktions-Erfassungseinheit 19. Zumindest die visuelle Erfassungseinheit 14, Bewegungs-Erfassungseinheit 15, Informationsdaten-Synchronisationseinheit 16 und Handlungsablaufs-Erzeugungseinheit 17 bilden in Kombination mit zumindest einer teilweise automatisierten Inspektions- und/oder Wartungsvorrichtung 10 und zumindest einem Handlungsablaufmodell 23 ein System zur Durchführung von KI-gestützten Handlungsabläufen 20.

Im Lichte der Offenbarung können Teile der Vorrichtung zur Generierung von KI-gestützten Handlungsabläufen in der Trainingsbrille 13 und Teile der Vorrichtung 1 in der Inspektions- und/oder Wartungsvorrichtung 10 enthalten sein. Alternativ ist es möglich, dass die Vorrichtung zur Generierung von KI-gestützten Handlungsabläufen vollständig in der Trainingsbrille 13 integriert ist. Die Trainingsbrille 13 kann zumindest eine Recheneinheit und/oder zumindest eine Speichereinheit umfassen. Auch kann zumindest eine Recheneinheit und/oder Speichereinheit, welche eingerichtet ist, die Aufgabe zumindest einer Untereinheit der Vorrichtung 1 durchzuführen, an einem weiteren Ort als der Trainingsbrille 13 und/oder der Inspektions- und/oder Wartungsvorrichtung 10 eingerichtet sein. Auch kann zumindest eine Rechen- und/oder Speichereinheit als Server und/oder cloudbasiert eingerichtet sein. Alternativ ist es möglich, dass die Inspektions- und/oder Wartungsvorrichtung 10 die Vorrichtung zur Generierung von KI-gestützten Handlungsabläufen 1 vollständig umfasst. Das Handlungsablaufmodell 23 kann Teil zumindest einer der genannten Vorrichtungen sein. Auch kann die Trainingsbrille 13 das Handlungsablaufmodell 23 umfassen. Auch kann die Inspektions- und/oder Wartungsvorrichtung 10 das Handlungsablaufmodell 23 umfassen. Auch kann das Handlungsablaufmodell 10 von der Trainingsbrille 13 auf die Inspektions- und/oder Wartungsvorrichtung 10 übertragen werden. Wiederum alternativ kann sich das Handlungsablaufmodell weder in der Trainingsbrille 13, noch in der Inspektions- und/oder Wartungsvorrichtung 10 befinden, sondern beispielsweise auf einem externen Speicher, der beispielsweise cloudbasiert eingerichtet sein kann.

Vorliegende Merkmale, Komponenten und spezifische Details können ausgetauscht und/oder kombiniert werden, um weitere Ausführungsformen zu erstellen, in Abhängigkeit des geforderten Verwendungszwecks. Etwaige Modifikationen die im Bereich des Wissens des Fachmanns liegen, werden mit der vorliegenden Beschreibung implizit offenbart.

### Bezugszeichen:

- 1: Vorrichtung zur Generierung von KI-gestützten Handlungsabläufen
- 2.1, 2.2: Kamera
- 3.1, 3.2: Positionsmarken
- 4: Eye-Tracking-Einheit
- 5.1, 5.2: Optik der Eye-Tracking-Einheit
- 6: Trainer
- 7: Trainingsobjekt
- 8: Sichtfeld
- 9: Fokuspunkt
- 10: Inspektions- und/oder Wartungsvorrichtung
- 11: Koordinatensystem
- 12: Pfad
- 13: Trainingsbrille
- 14: Visuelle Erfassungseinheit
- 15: Bewegungs-Erfassungseinheit
- 16: Informationsdaten-Synchronisationseinheit
- 17: Handlungsablaufs-Erzeugungseinheit
- 18: Annotations-Erfassungseinheit
- 19: Handinteraktions-Erfassungseinheit
- 20: System zur Durchführung von KI-gestützten Handlungsabläufen
- 21: Erfassungsbereich
- 22.1-22.5: Trainingsbild
- 23: Handlungsablaufmodell

## Patentansprüche

1. Eine Vorrichtung zur Generierung von KI-gestützten Handlungsabläufen (1) für eine zumindest teilautomatisierte Inspektions- und/oder Wartungsvorrichtung (10), umfassend:
eine visuelle Erfassungseinheit (14) zur Erzeugung von visuellen Informationsdaten, wobei die visuelle Erfassungseinheit (14) eingerichtet ist, zumindest eigene optische Wahrnehmungen eines Trainers (6) bezügliches eines Zielobjekt zu erfassen und als die visuellen Informationsdaten zu speichern;
eine Bewegungserfassungseinheit (15) zur Erzeugung von Bewegungsinformationsdaten, wobei die Bewegungserfassungseinheit (15) eingerichtet ist, zumindest eine Bewegung und eine Position des Körpers des Trainers (6) in einem dreidimensionalen Raum zu erfassen und als die Bewegungsinformationsdaten zu speichern;
eine Informationsdaten-Synchronisationseinheit (16), welche eingerichtet ist, basierend auf zumindest den visuellen Informationsdaten und den Bewegungsinformationsdaten, einen synchronisierten Datensatz zur Beschreibung eines Inspektions- und/oder Wartungsprozesses zu erstellen; und
eine auf einem neuronalen Netzwerk basierende Handlungsablaufs-Erzeugungseinheit (17), welche eingerichtet ist, den synchronisierten Datensatz zu analysieren, ein Bewegungsmuster für die Inspektions- und/oder Wartungsvorrichtung (10) zur Nachbildung des Inspektions- und/oder Wartungsprozesses basierend auf dem synchronisierten Datensatz zu extrahieren und ein Handlungsablaufmodell (23) zur Steuerung der Inspektions- und/oder Wartungsvorrichtung (10) anhand des Bewegungsmusters zu erstellen.

2. Die Vorrichtung gemäß Anspruch 1, ferner umfassend:
eine Annotations-Erfassungseinheit (18), welche eingerichtet ist, zusätzliche Informationen bezüglich des Inspektions- und/oder Wartungsprozesses durch eine direkte Eingabe des Trainers (6) zu erfassen und als Annotationsinformationsdaten zu speichern; und wobei
die Informationsdaten-Synchronisationseinheit (16) eingerichtet ist, den synchronisierten Datensatz zur Beschreibung des Inspektions- und/oder Wartungsprozesses zusätzlich basierend auf den Annotationsinformationsdaten zu erstellen.

3. Die Vorrichtung gemäß Anspruch 1 oder 2, ferner umfassend:
eine Handinteraktions-Erfassungseinheit (19) zur Erzeugung von Handinteraktionsinformationsdaten, wobei die Handinteraktions-Erfassungseinheit (19) eingerichtet ist, zumindest einen Handparameter aus einer Gruppe von: Bewegungen einzelner Handabschnitte des Trainers (6), Kontaktpunkte einer Hand des Trainers (6) mit einem Gegenstand und haptischen Eigenschaften der Hand des Trainers (6) und/oder des Gegenstandes während einer Interaktion der Hand des Trainers (6) mit dem Gegenstand zu erfassen und als die Handinteraktionsinformationsdaten zu speichern; und
die Informationsdaten-Synchronisationseinheit (16) eingerichtet ist, den synchronisierten Datensatz zur Beschreibung des Inspektions- und/oder Wartungsprozesses zusätzlich basierend auf den Handinteraktionsinformationsdaten zu erstellen.

4. Die Vorrichtung gemäß zumindest einem der vorhergehenden Ansprüche,
wobei die zur Erstellung des synchronisierten Datensatzes erfassten Informationsdaten zeitlich parallel von den jeweiligen Erfassungseinheiten erfasst werden, vorzugsweise während einer einzelnen Handlung des Trainers (6).

5. Die Vorrichtung gemäß zumindest einem der vorhergehenden Ansprüche,
wobei die von der visuellen Erfassungseinheit (14) erfassten eigenen optischen Wahrnehmungen des Trainers (6) bezüglich des Zielobjektes zumindest eine Blickrichtung des Trainers (6) auf das Zielobjekt oder ein Teil des Zielobjektes und dreidimensionale Raumkoordinaten des Blickursprungs und des vom Trainer (6) fokussierten Blickpunktes umfasst; und
die visuelle Erfassungseinheit (14) zusätzlich eingerichtet ist, einen Blickvektor basierend auf der erfassten Blickrichtung und den dreidimensionalen Raumkoordinaten des Blickursprungs und des fokussierten Blickpunktes zu berechnen, der die Richtung des Blicks des Trainers (6) relativ zu der Position des Trainers (6) beschreibt und den Blickvektor als zusätzliche Komponente in den visuellen Informationsdaten zu speichern.

6. Die Vorrichtung gemäß Anspruch 5,
wobei die visuelle Erfassungseinheit (14) zumindest eine Kamera (2.1,2.2) umfasst und mit einem Eye-Tracking-Mechanismus ausgestattet ist, um zumindest die Blickrichtung des Trainers (6) zu erfassen; und
die visuelle Erfassungsvorrichtung (14) eingerichtet ist, die optische Wahrnehmung des Trainers (6) kontinuierlich zu erfassen.

7. Die Vorrichtung gemäß zumindest einem der vorhergehenden Ansprüche, wobei
die Bewegungserfassungseinheit (15) eine Mehrzahl von auf optischen und/oder mechanischen Wechselwirkungen basierenden Körpersensorelementen umfasst, welche zur Erfassung der Bewegung und der Position des Körpers des Trainers (6) an verschiedenen Stellen des Körpers des Trainers (6) anzubringen sind; und
die Bewegungserfassungseinheit (15) eingerichtet ist, die Bewegung und die Position des Körpers des Trainers (6) basierend auf einer Zeitreihe von mittels der Körpersensorelementen erfassten Daten zu erfassen.

8. Die Vorrichtung gemäß Anspruch 3,
wobei die Handinteraktions-Erfassungseinheit (19) ein oder mehrere auf optischen und/oder mechanischen Wechselwirkungen basierende Handsensorelemente umfasst, welche zur Erfassung des zumindest einen Handparameters an zumindest einer Stelle der Hand des Trainers (6) anzubringen sind;
wobei die Bewegungserfassungseinheit (15) eingerichtet ist, den zumindest einen Handparameter basierend auf einer Zeitreihe von mittels der Handsensorelementen erfassten Daten zu erfassen;
und die haptischen Eigenschaften der Hand des Trainers (6) und/oder des Gegenstandes zumindest einen ausgeübten Druck des Trainers (6) auf den Gegenstand, eine durch die Interaktion des Trainers (6) erzeugte Verformung des Gegenstands oder eine Temperatur des Gegenstands umfassen.

9. Die Vorrichtung gemäß Anspruch 4,
die Informationsdaten-Synchronisationseinheit (16) eingerichtet ist, den synchronisierten Datensatz in Echtzeit während der Erfassung der jeweiligen Informationsdaten durch die Erfassungseinheiten zu erstellen und der Handlungsablaufs-Erzeugungseinheit (17) zum Anlernen eines auf der momentanen Handlung des Trainers (6) basierenden Bewegungsmusters zu übertragen.

10. Die Vorrichtung gemäß Anspruch 3,
wobei der Wartungs- und/oder Inspektionsprozess zumindest ein Prozess zur Montage, Demontage oder Justierung von Bauteilen innerhalb eines Fahrzeugs oder eines Fahrzeugelements ist; und
das Zielobjekt und der von der Handinteraktions-Erfassungseinheit (19) erfasste Gegenstand zumindest ein Werkzeug oder ein Fahrzeugelement ist.

11. Ein System zur Durchführung von KI-gestützten Handlungsabläufen für eine zumindest teilautomatisierte Inspektions- und/oder Wartungsvorrichtung (10) umfassend:
die Vorrichtung gemäß Anspruch 1; und
die zumindest teilautomatisierte Inspektions- und/oder Wartungsvorrichtung (10);
wobei die zumindest teilautomatisierte Inspektions- und/oder Wartungsvorrichtung (10) eingerichtet ist, das durch die Handlungsablaufs-Erzeugungseinheit (17) erstellte Handlungsablaufmodell (23) zu integrieren und basierend auf dem integrierten Handlungsablaufmodel (23) den Inspektions- und/oder Wartungsprozess durchzuführen.

12. Ein Verfahren zur Generierung von KI-gestützten Handlungsabläufen für eine zumindest teilautomatisierte Inspektions- und/oder Wartungsvorrichtung (10), umfassend die Schritte:
- Erfassen von zumindest eigenen optischen Wahrnehmungen eines Trainers (6) bezügliches eines Zielobjekt und Speichern der optischen Wahrnehmungen als die visuellen Informationsdaten mittels einer visuellen Erfassungseinheit;
- Erfassen zumindest einer Bewegung und einer Position des Körpers des Trainers (6) in einem dreidimensionalen Raum Speichern der zumindest einen Bewegung und Position des Körpers des Trainers (6) als Bewegungsinformationsdaten mittels einer Bewegungserfassungseinheit (15);
- Erstellen, basierend auf zumindest den visuellen Informationsdaten und den Bewegungsinformationsdaten, eines synchronisierten Datensatz zur Beschreibung eines Inspektions- und/oder Wartungsprozesses mittels einer Informationsdaten-Synchronisationseinheit (16);
- Analysieren des synchronisierten Datensatzes, Extrahieren eines Bewegungsmuster für die Inspektions- und/oder Wartungsvorrichtung (10) zur Nachbildung des Inspektions- und/oder Wartungsprozesses basierend auf dem synchronisierten Datensatz und Erstellen eines Handlungsablaufmodel (23) zur Steuerung der Inspektions- und/oder Wartungsvorrichtung (10) anhand des angelernten Bewegungsmusters mittels einer auf einem neuronalem Netzwerk-basierenden Handlungsablaufs-Erzeugungseinheit (17).

13. Das Verfahren gemäß Anspruch 12, ferner umfassend die Schritte:
- Erfassen von zusätzlichen Informationen bezüglich des Inspektions- und/oder Wartungsprozesses durch eine direkte Eingabe des Trainers (6) an eine Annotations-Erfassungseinheit (18), und Speichern der zusätzlichen Informationen als Annotationsinformationsdaten mittels der Annotations-Erfassungseinheit (18); und
- Erstellen des synchronisierten Datensatzes zur Beschreibung des Inspektions- und/oder Wartungsprozesses zusätzlich basierend auf den Annotationsinformationsdaten mittels der Informationsdaten-Synchronisationseinheit (16).

14. Das Verfahren gemäß Anspruch 12 oder 13, ferner umfassend die Schritte;
- Erfassen von zumindest einem Handparameter aus einer Gruppe von: Bewegungen einzelner Handabschnitte des Trainers (6), Kontaktpunkte einer Hand des Trainers (6) mit einem Gegenstand und haptischen Eigenschaften der Hand des Trainers (6) und/oder des Gegenstandes während einer Interaktion der Hand des Trainers (6) mit dem Gegenstand mittels einer Handinteraktions-Erfassungseinheit (19) und Speichern des zumindest einen Handparameters als Handinteraktionsinformationsdaten mittels der Handinteraktions-Erfassungseinheit (19); und
- Erstellen des synchronisierten Datensatzes zur Beschreibung des Inspektions- und/oder Wartungsprozesses zusätzlich basierend auf den Handinteraktionsinformationsdaten mittels der Informationsdaten-Synchronisationseinheit (16).

15. Das Verfahren gemäß zumindest einen der Ansprüche 12 bis 14,
wobei die zur Erstellung des synchronisierten Datensatzes erfassten Informationsdaten zeitlich parallel von den jeweiligen Erfassungseinheiten erfasst werden, vorzugsweise während einer einzelnen Handlung des Trainers (6); und
der synchronisierte Datensatz in Echtzeit während der Erfassung der jeweiligen Informationsdaten durch die Erfassungseinheiten erstellt und der Handlungsablaufs-Erzeugungseinheit (17) zum Anlernen eines auf der momentanen Handlung des Trainers (6) basierenden Bewegungsmusters übertragen wird.
